## Europäisches Patentamt
## European Patent Office
## Office européen des brevets

(19)

(11) Veröffentlichungsnummer: **0 007 518**
**B1**

(12)

# EUROPÄISCHE PATENTSCHRIFT

(45) Veröffentlichungstag der Patentschrift:
14.10.81

(51) Int. Cl.³: **D 01 F 6/18, C 08 L 33/20**

(21) Anmeldenummer: **79102374.0**

(22) Anmeldetag: **11.07.79**

(54) Verfahren zur Stabilisierung von Spinnlösungen aus Acrylnitrilpolymeren und die stabilisierten Spinnlösungen.

(30) Priorität: **21.07.78 DE 2832212**

(43) Veröffentlichungstag der Anmeldung:
**06.02.80 Patentblatt 80/3**

(45) Bekanntmachung des Hinweises auf die Patenterteilung:
**14.10.81 Patentblatt 81/41**

(84) Benannte Vertragsstaaten:
**AT DE GB IT**

(56) Entgegenhaltungen:
**DE-A-2 315 283**
**US-A-2 503 245**
**US-A-2 642 408**

(73) Patentinhaber: **BAYER AG, Zentralbereich Patente, Marken und Lizenzen, D-5090 Leverkusen 1, Bayerwerk (DE)**

(72) Erfinder: **David, Karl-Heinz, Dr., Wilhelm-Busch-Strasse 48, D-4047 Dormagen 5 (DE)**
Erfinder: **Nogaj, Alfred, Dr., Im Winkel 11, D-4047 Dormagen 1 (DE)**
Erfinder: **Rinkler, Heinrich, Dr., Hans-Sachs-Strasse 10, D-4047 Dormagen 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Stabilisierung von Spinnlösungen aus Acrylnitrilpolymeren und die stabilisierten Spinnlösungen

Die Erfindung betrifft ein Verfahren zur Stabilisierung von Spinnlösungen aus Acrylnitrilpolymeren und einem organischen Lösungsmittel gegen ein Auskristallisieren von anorganischen Salzen, die in geringer Menge im Polymerisat vorhanden sind, während der Herstellung und Verarbeitung der Spinnlösung. Sie betrifft ferner die so stabilisierten Spinnlösungen.

Acrylnitrilhomo- und copolymerisate, die insbesondere durch Fällungspolymerisation in Wasser in Gegenwart eines Redoxsystems aus anorganischen Salzen, z. B. einem Redoxsystem aus Kaliumperoxodisulfat, Natriumhydrogensulfit, und Eisensulfat hergestellt wurden, enthalten anorganische Verbindungen, die auch bei den üblicherweise angewandten Waschverfahren nicht vollständig entfernt werden. Eine Verminderung der Salzmenge im Polymerisat kann durch verlängerte Waschzeiten und eine Erhöhung der Waschwassermenge erreicht werden, dies führt jedoch zu erhöhten Herstellungskosten. Eine vollständige Entfernung der anorganischen Salze ist aber auch dann nur mit extrem langen Waschzeiten bei erhöhten Temperaturen zu erreichen. Bei diesen Salzen handelt es sich in der Hauptsache um Natrium- und Kaliumsulfat, die als Zerfallsprodukte des Redoxsystems entstehen. Beim Auflösen von Acrylnitrilpolymerisaten, die geringe Mengen dieser Salze enthalten, in organischen Lösungsmitteln, wie Dimethylformamid und Dimethylacetamid, bei Temperaturen unter 100°C werden zuerst klare Spinnlösungen erhalten. Nach einiger Zeit und besonders beim Erhitzen auf höhere Temperaturen, wie sie z. B. bei einem Trockenspinnprozeß üblich sind, fallen diese Salze aus. Je nach Menge und Zusammensetzung der im Polymerisat vorhandenen Salze, der Temperatur und Konzentration der Spinnlösung und der Zusammensetzung der Polymeren macht sich diese Salzausscheidung durch eine mehr oder weniger starke Trübung bemerkbar, oder es können bereits mit dem bloßen Auge Partikel in der Spinnlösung erkannt werden. Im Spinnprozeß kann diese Salzausscheidung zu erheblichen Störungen führen. So können bereits vor der Filtration in sehr fein verteilter Form ausfallende Salze die Filter zusetzen. Besonders anfällig gegen eine Salzausscheidung ist die Spinnlösung jedoch, wenn sie nach der Filtration und vor der Spinndüse auf Temperaturen von etwa 110—150°C aufgeheizt wird. Dabei können größere Partikel die Düsenlöcher ganz oder teilweise versperren oder die Düsenlöcher setzen nach und nach anorganische Substanz an, wobei sie sich verengen. Dadurch wird die Qualität und Gleichmäßigkeit des Spinngutes vermindert und die betroffenen Düsen müssen ausgewechselt werden. Häufiger Düsenwechsel führt neben einer Qualitätsminderung jedoch auch zu erhöhten Kosten.

Es wurden bereits verschiedene Zusätze zur Verhinderung oder zur Entfernung von Trübungen in Spinnlösungen von Acrylnitrilpolymerisaten vorgeschlagen. So soll ein Zusatz von Carbonsäureanhydriden, z. B. Essigsäureanhydrid, bei der Lösungspolymerisation von Acrylnitril die durch Zerfallsprodukte des zur Initiierung verwendeten Persulfats verursachte Trübung verhindern. Des weiteren sollen bei der Lösungspolymerisation auftretende Trübungen, die durch Verunreinigungen und Oligomere des als Comonomer eingesetzten ungesättigten Sulfonats verursacht werden, durch Zusatz von Maleinsäure oder gesättigten aliphatischen, cycloaliphatischen oder aromatischen Sulfonsäuren verhindert bzw. beseitigt werden (DD-PS 1 13 016 und DD-PS 1 23 098). Außerdem wurde vorgeschlagen, bei der Lösungspolymerisation von Acrylnitril anorganische oder organische Säuren, wie Phosphorsäure, Schwefelsäure, Salzsäure, Salpetersäure, Malonsäure oder Zitronensäure zuzusetzen, um im wesentlichen farblose und durchsichtige Lösungen zu erhalten (AT-PS 2 36 642). Bei durch Fällungspolymerisation hergestellten Acrylnitrilpolymerisaten sollen Trübungen, die bereits während der Herstellung der Spinnlösung bei Temperaturen unter 100°C auftreten, durch Einstellung eines pH-Wertes von 3—4 mit starken Säuren, wie Salpetersäure, Salzsäure oder Schwefelsäure beseitigt werden (Ja 73 39 785). Weiterhin sollen durch Zusatz von Alkanphosphonsäuren, Alkansulfonsäuren und aromatischen Sulfonsäuren klare, farblose und Gel-freie Lösungen erhalten werden (US-PS 25 04 245). Keiner dieser vorgeschlagenen Zusätze ist jedoch geeignet, das Auskristallisieren von Säuren aus Acrylnitrilpolymerisaten, die durch Fällungspolymerisation hergestellt wurden, beim Erhitzen der Spinnlösung auf Temperaturen nahe bei oder über 100°C zu verhindern.

Es wurde nun gefunden, daß Spinnlösungen von Acrylnitrilpolymeren in organischen Lösungsmitteln durch Zusatz von 0,005—0,5%, vorzugsweise von 0,01—0,1%, bezogen auf die Polymerisatmenge, Phosphonocarbonsäuren oder Phosphonsäure- und/oder Carboxylgruppen enthaltenden Polymerisaten gegen ein Auskristallisieren von anorganischen Salzen, die in geringer Menge im Polymerisat vorhanden ist, stabilisiert werden können. Die genannten Substanzen verhindern entweder vollständig das Auftreten von Trübungen durch ausfallende anorganische Salze bzw. das Auskristallisieren von größeren Salzpartikeln während der Herstellung und Verarbeitung der Spinnlösung oder sie vermindern die Größe und Zahl der ausfallenden Salzteilchen.

Solchermaßen stabilisierte Spinnlösungen zeigen ein deutlich verbessertes Spinnverhalten. Ein zusätzlicher Vorteil der genannten Stabilisatoren ist, daß sie die Vergilbung von Fäden und Fasern, die aus solchen Spinnlösungen hergestellt werden, während thermischer Belastungen deutlich vermindern.

Zur Stabilisierung der Spinnlösung geeignet sind Phosphonocarbonsäuren, wie 2-Phosphonobutan-1,2,4-tricarbonsäure oder 2,4-Diphosphonobutan-1,2-dicarbonsäure und/oder Polycarbonsäuren, wie Polyacrylsäure oder Polymaleinsäure sowie Copolymerisate von Vinylphosphonsäure und/oder ungesättigten Carbonsäuren und anderen ungesättigten Verbindungen. Diese Stabilisatoren werden dem Lösungsmittel für das Acrylnitrilpolymere vorteilhafterweise vor Herstellung der Spinnlösung zugegeben, um eine gleichmäßige Verteilung zu gewährleisten. Geeignete Lösungsmittel für Acrylnitrilpolymere sind z. B. Dimethylformamid oder Dimethylacetamid.

Die Acrylnitrilpolymerisate, deren Spinnlösungen erfindungsgemäß stabilisiert werden, können Homopolymerisate oder Copolymerisate von Acrylnitril sein. Übliche Comonomere sind andere Vinylverbindungen, wie Acrylsäure- und Methacrylsäureester, Styrol, Vinylchlorid, Vinylidenchlorid oder Vinylacetat und ungesättigte Verbindungen mit ionisierbaren Säuregruppen, wie Allyl- und Methallylsulfonsäure, Vinylsulfonsäure, Styrolsulfonsäure und deren Salze. Die Menge der in diesen Polymerisaten enthaltenen anorganischen Salze, überwiegend Natriumsulfat und Kaliumsulfat, läßt sich nicht genau bestimmen, da die durch Initiierung mit einem Redoxsystem hergestellten Polymermoleküle an den Endgruppen ionisierbare Sulfo- oder Sulfatgruppen besitzen, die zumindest teilweise in der Salzform vorliegen. Außerdem können die zur Verbesserung der Anfärbbarkeit über ein Comonomeres in das Polymerisat eingeführten Säuregruppen ganz oder teilweise in der Salzform vorliegen. Der durch Veraschung bestimmte Anteil anorganischer Substanzen im Polymerisat gibt daher nicht nur die Menge der freien oder gegebenenfalls adsorptiv gebundenen Salze im Polymerisat an, sondern auch die über ionische Gruppen im Polymerisat gebundene Menge an Metallionen, überwiegend Alkaliionen.

Ein einfacher Test, ob ein Polymerisat anorganische Bestandteile enthält, die beim Erwärmen der Lösung ausfallen, besteht darin, eine Lösung des Polymerisates für einige Zeit auf erhöhte Temperaturen zu erhitzen. Nach der Temperung können ausgefallene Salze als Trübung oder als diskrete Partikel bereits mit dem bloßen Auge erkannt werden, unter dem Mikroskop können Größe, Form und Häufigkeit der Salzkristalle beurteilt werden. Das ausgefallene Salz kann dann, gegebenenfalls nach Verdünnen der Lösung, abzentrifugiert und bestimmt werden. Mit diesem einfachen Labortest kann beurteilt werden, ob ein Polymerisat Bestandteile enthält, die zu Spinnstörungen führen können und es kann die Wirksamkeit von Zusätzen zur Stabilisierung von Spinnlösungen gegen eine Salzausscheidung überprüft werden.

Über den Wirkungsmechanismus der vorgeschlagenen Stabilisatoren ist nur wenig bekannt. Es wird angenommen, daß die erfindungsgemäß wirksamen Substanzen das Kristallwachstum stören, indem sie z. B. die aktiven Zentren an Kristallkeimen besetzen. Ein Hinweis für diese Annahme ist die Beobachtung, daß bei Stabilisatorkonzentrationen, die nicht ausreichen, eine Salzausscheidung vollständig zu verhindern, die Kristallform verändert wird. Anstelle von regelmäßigen Kristallen, z. B. in Sternform, entstehen dann häufig lockere Zusammenballungen ohne erkennbare Kristallstruktur. Auf keinen Fall wirken die erfindungsgemäßen Stabilisatoren als Lösungsvermittler. Dafür ist ihre Konzentration zu gering und außerdem vermögen sie einmal ausgefallene Salze nicht wieder aufzulösen.

Die folgenden Beispiele dienen der näheren Erläuterung der Erfindung, Teile und Prozentangaben beziehen sich auf das Gewicht.

### Beispiel 1

Ein Copolymerisat aus 93,6% Acrylnitril, 5,7% Acrylsäuremethylester und 0,7% Natriummethallylsulfonat, das durch Fällungspolymerisation in Wasser mit einem Redoxsystem aus Kaliumperoxodisulfat, Natriumhydrogensulfit und Eisensulfat hergestellt wurde und einen Aschegehalt von 0,11% aufweist, wird bei 80°C unter Rühren in Dimethylformamid gelöst. Die klare, hochviskose Lösung mit einer Polymerkonzentration von 30% wird 4 Stunden auf 140°C erhitzt. In der Lösung lassen sich jetzt mit bloßem Auge zahlreiche Partikel erkennen, die unter dem Mikroskop als große verzweigte Kristalle erscheinen.

### Beispiel 2

700 g Dimethylformamid werden mit 0,3 g einer 50%igen wäßrigen Lösung von 2,4-Diphosphonobutan-1,2-dicarbonsäure vermischt. In dieser Lösung werden bei 80°C unter Rühren 300 g des gleichen Polymerisates wie in Beispiel 1 gelöst. Die Zusatzmenge an Phosphonocarbonsäure beträgt 0,05%, bezogen auf die Polymerisatmenge. Die erhaltene klare Lösung wird 4 Stunden auf 140°C erhitzt. Die Polymerlösung ist nach dem Tempern vollkommen klar, auch unter dem Mikroskop lassen sich keine Kristalle erkennen.

Wird die Menge an Phosphonocarbonsäure auf 0,025%, bezogen auf Polymerisat, reduziert, dann zeigt die Polymerlösung nach dem Tempern einzelne sehr kleine Partikel, die unter dem Mikroskop als kleine runde Gebilde erscheinen. Gegenüber Beispiel 1 sind Anzahl und Größe der Salzpartikel deutlich vermindert.

## Beispiel 3

Analog Beispiel 2 werden 30%ige Polymerlösungen des in Beispiel 1 beschriebenen Polymeren in Dimethylformamid mit verschiedenen Zusätzen hergestellt und 4 Stunden auf 140°C erhitzt. Die getemperten Lösungen werden visuell und mikroskopisch beurteilt. Die Ergebnisse sind in Tabelle 1 zusammengestellt. Die Vergleichsversuche zeigen, daß eine vergleichbare Stabilisierung durch andere anorganische oder organische Säuren oder Säureanhydride nicht erzielt wird.

Tabelle 1

| Zusätze | Konzentration[1] % | Beurteilung[2] |
|---|---|---|
| 2-Phosphonobutan-1,2,4-tricarbonsäure | 0,05 | a) schwache Trübung<br>b) kleine runde Gebilde |
| 2,4-Diphosphonobutan-dicarbonsäure | 0,05 | a) klare Lösung<br>b) klare Lösung |
| Polymaleinsäure (Belgard EV, Ciba-Geigy) | 0,05 | a) schwache Trübung<br>b) kleine runde Gebilde |
| Polyacrylsäure (Schlichte S, BASF) | 0,1 | a) klare Lösung<br>b) sehr kleine runde Gebilde |
| **Vergleichsversuche** | | |
| Ohne Zusatz | — | a) sehr starke Salzausscheidung<br>b) große Sterne |
| Schwefelsäure | 0,5 | a) sehr starke Salzausscheidung<br>b) große Sterne mit langen Zacken |
| p-Toluolsulfonsäure | 0,1 | a) starke Salzausscheidung<br>b) große Sterne |
| Methansulfonsäure | 0,05 | a) starke Salzausscheidung<br>b) große Sterne |
| Essigsäure | 0,5 | a) sehr starke Salzausscheidung<br>b) große Sterne |
| Maleinsäure | 0,2 | a) starke Salzausscheidung<br>b) große Kristallzweige |
| Essigsäureanhydrid | 0,2 | a) starke Salzausscheidung<br>b) große Sterne |
| Benzolphosphonsäure | 0,05 | a) starke Salzausscheidung<br>b) große Sterne |
| Methanphosphonsäure | 0,05 | a) zahlreiche Partikel<br>b) lange, z. T. verzweigte Kristallnadeln |
| Methanphosphonsäure | 0,5 | a) zahlreiche Partikel<br>b) sehr große, z. T. verzweigte Kristallnadeln |

[1]) bezogen auf die Polymerisatmenge.
[2]) a) visuelle Beurteilung,
    b) mikroskopische Beurteilung.

### Beispiel 4

Ein Copolymerisat der gleichen Zusammensetzung wie in Beispiel 1, das jedoch bei der Aufbereitung intensiver gewaschen wurde und einen Aschegehalt von 0,08% aufweist, wird unter Zusatz von 0,05% 2-Phosphonobutan-1,2,4-tricarbonsäure in Dimethylformamid zu einer 30%igen Lösung verarbeitet. Nach 4 Stunden bei 140°C ist die Lösung noch vollkommen klar, auch unter dem Mikroskop lassen sich keine Kristalle erkennen. Eine Lösung des gleichen Polymerisats ohne Zusatz der Phosphonocarbonsäure zeigt nach dem Tempern zahlreiche kleine Partikel, die unter dem Mikroskop als kleine Sterne erscheinen.

### Beispiel 5

Ein Copolymerisat aus 91,1% Acrylnitril, 5,4% Acrylsäuremethylester und 3,4% Natriummethallylsulfonat, das durch Fällungspolymerisation mit dem gleichen Redoxsystem wie in Beispiel 1 hergestellt wurde und einen Aschegehalt von 0,15% aufweist, wird unter Zusatz von 0,05% 2,4-Diphosphonobutan-1,2-dicarbonsäure, bezogen auf die Polymerisatmenge, zu einer 30%igen Lösung in Dimethylformamid verarbeitet und 4 Stunden auf 140°C erhitzt. Die getemperte Lösung ist vollkommen klar, auch unter dem Mikroskop lassen sich keine Kristalle erkennen.

Eine Lösung des gleichen Polymerisates ohne Zusatz zeigt nach dem Tempern eine starke Trübung, unter dem Mikroskop lassen sich zahlreiche kleine runde Kristalle erkennen.

### Beispiel 6

Ein Homopolymerisat aus Acrylnitril mit einem Aschegehalt von 0,04% wird unter Zusatz von 0,05% 2,4-Diphosphonobutan-1,2-dicarbonsäure bezogen auf die Polymerisatmenge zu einer 30%igen Lösung in Dimethylformamid verarbeitet und 4 Stunden auf 140°C erhitzt. Die getemperte Lösung ist klar, auch unter dem Mikroskop lassen sich keine Kristalle erkennen. Eine Lösung des gleichen Polymerisats ohne Zusatz zeigt nach dem Tempern Partikel, unter dem Mikroskop lassen sich viele kleine Sterne erkennen.

### Beispiel 7

4800 kg des Polymerisats aus Beispiel 4 werden in einer Schnecke mit einer Mischung aus 11 465 kg Dimethylformamid und 5 kg einer 50%igen wäßrigen Lösung von 2-Phosphonobutan-1,2,4-tricarbonsäure zu einem dicken Brei angeteigt, welcher in einem Edelstahl-Kessel mit Rührer auf 85°C geheizt und durch Rühren in eine viskose klare Lösung überführt wird. Die Lösung wird bei etwa 85°C filtriert und den Düsen einer Spinnmaschine zugeführt. Unmittelbar vor den Düsen wird die Spinnlösung in einem Wärmeaustauscher auf 140°C erhitzt und dann unter beim Trockenspinnen üblichen Bedingungen versponnen. Die Zahl der wegen Spinnstörungen ausgewechselten Düsen der Spinnmaschine wird über einen Zeitraum von 60 Tagen verfolgt, sie liegt bei 15,8 Düsenwechseln/1000 Spinnschächten × Tag. Im Anschluß an diesen Spinnversuch wird unter gleichen Bedingungen eine Lösung versponnen, die, wie oben angegeben, aber ohne Zusatz von 2-Phosphonobutan-1,2,4-tricarbonsäure, hergestellt wurde. Nach etwa 14 Tagen steigt die Zahl der Düsenwechsel auf über 30 Düsenwechsel/1000 Spinnschächten × Tag an und erreicht nach 21 Tagen über 60 Düsenwechsel/1000 Spinnschächte × Tag. Der Versuch wird daraufhin abgebrochen. An den Bohrungen der ausgewechselten Spinndüsen lassen sich Ablagerungen erkennen, die zu einer Verengung der Düsenbohrung führen, einzelne Düsenlöcher sind durch kristalline Partikel verstopft. Ähnliche Ablagerungen lassen sich auch an den beheizten Flächen der Wärmeaustauscher feststellen.

## Patentansprüche

1. Verfahren zur Stabilisierung von Spinnlösungen von Acrylnitrilpolymerisaten und einem organischen Lösungsmittel gegen ein Auskristallisieren von anorganischen Salzen, dadurch gekennzeichnet, daß der Spinnlösung 0,005—0,5%, bezogen auf die Polymerisatmenge, einer Phosphonocarbonsäure oder eines Phosphonsäure- und/oder Carboxylgruppen enthaltenden Polymerisates zugesetzt werden.

2. Verfahren nach Anspruch 1, dadurch gekennzeichnet, daß der Spinnlösung 0,01 bis 0,1% der Stabilisatoren zugegeben werden.

3. Verfahren nach den Ansprüchen 1 und 2, dadurch gekennzeichnet, daß als Lösungsmittel zur Herstellung der Spinnlösung Dimethylformamid verwendet wird.

4. Verfahren nach den Ansprüchen 1 bis 3, dadurch gekennzeichnet, daß als Stabilisator

5

2-Phosphonobutan-1,2,4-tricarbonsäure oder 2,4-Diphosphonobutan-1,2-dicarbonsäure verwendet wird.

5. Verfahren nach den Ansprüchen 1 bis 3, dadurch gekennzeichnet, daß als Stabilisator Polyacrylsäure oder Polymaleinsäure verwendet wird.

6. Stabilisierte Spinnlösungen von Acrylnitrilpolymerisaten, hergestellt nach einem der Verfahren gemäß den Ansprüchen 1 bis 5.

## Claims

1. Process for stabilizing spinnung solutions of acrylonitrile polymers and an organic solvent to prevent the crystallization of inorganic saltes, characterised in that 0,005—0,5%, based on the quantity of polymer, of a phosphonocarboxylic acid or of a polymer containing phosphonic acid and/or carboxyl groups is added to the spinning solution.

2. Process according to Claim 1, characterised in that 0,01 to 0,1% of the stabilizers is added to the spinnung solution.

3. Process according to Claims 1 and 2, characterised in that dimethyl formamide is used as the solvent for preparing the spinnung solution.

4. Process according to Claims 1 to 3, characterised in that the stabilizer used is 2-phosphonobutane-1,2,4-tricarboxylic acid or 2,4-diphosphonobutane-1,2-dicarboxylic acid.

5. Process according to Claims 1 to 3, characterised in that the stabilizer used is polyacrylic acid or polymaleic acid.

6. Stabilized spinning solutions of acrylonitrile polymers, prepared by one of the processes according to Claims 1 to 5.

## Revendications

1. Procédé destiné à stabiliser des solutions à filer organiques de polymères d'acrylonitrile contre une cristallisation de sels minéraux, suivant lequel on ajoute à la solution à filer — par rapport à la quantité de polymère — 0,005 à 0,5% d'un acide phosphonocarbonique ou d'un polymère contenant des groupes acide phosphonique et/ou carboxyle.

2. Même procédé que le 1. avec une quantité de stabilisants de 0,01 à 0,1%.

3. Même procédé que le 1. et le 2., avec du diméthylformamide comme solvant.

4. Même procédé que le 1., le 2. et le 3., avec de l'acide 2-phosphonobutane-1,2,4-tricarbonique ou de l'acide 2,4-diphosphonobutane-1,2-dicarbonique comme stabilisant.

5. Même procédé que le 1., le 2. et le 3., avec de l'acide polyacrylique ou de l'acide polymaléique comme stabilisant.

6. Solutions à filer de polymères d'acrylonitrile stabilisées, préparées suivant un des procédés 1 à 5.